# EUROPEAN PATENT APPLICATION

(11) **EP 4 738 390 A1**
(43) Date of publication of application: **06.05.2026**
(21) Application number: 24831378.5
(22) Date of filing: 15.04.2024
(51) Int. Cl.: H01B 5/14, B32B 7/023, B32B 7/025, H01B 13/00

(54) **TRANSPARENT CONDUCTIVE FILM**

(30) Priority: 28.06.2023 JP 2023106347; 08.03.2024 JP 2024035730
(71) Applicant: Nitto Denko Corporation, Ibaraki-shi, Osaka 567-8680 (JP)
(72) Inventor: MIZUKAWA, Yuki, Ibaraki-shi, Osaka 567-8680 (JP); KONO, Fumihiko, Ibaraki-shi, Osaka 567-8680 (JP)
(74) Representative: Grünecker Patent- und Rechtsanwälte PartG mbB
(86) International application number: PCT/JP2024/014957
(87) International publication number: WO 2025/004503

(57) **Abstract**

Provided is a transparent conductive film excellent in translucency in a near-infrared region. The transparent conductive film according to one embodiment of the present invention is a transparent conductive film including: a substrate; and a conductive layer arranged on at least one side of the substrate, wherein the transparent conductive film has a surface resistance value of 200 Ω/□ or less, and wherein the transparent conductive film has a light transmittance in a wavelength region of from 780 nm to 2,500 nm of 85% or more.

## Description

### Technical Field

The present invention relates to a transparent conductive film.

### Background Art

A transparent conductive film obtained by forming a metal oxide layer such as an indium-tin composite oxide layer (ITO layer) on a resin film has heretofore been frequently used as a transparent conductive film to be used in, for example, an electrode of a touch sensor. However, there is a problem in that the transparent conductive film obtained by forming a metal oxide layer has low translucency in a near-infrared region, and a desired resistance value thereof is hardly obtained in consideration of translucency.

### Citation List

### Patent Literature

[PTL 1] JP 2009-505358 A

### Summary of Invention

### Technical Problem

The present invention has been made to solve the above-mentioned problem, and a primary object of the present invention is to provide a transparent conductive film excellent in translucency in a near-infrared region.

### Solution to Problem

[1] According to one embodiment of the present invention, there is provided a transparent conductive film, including: a substrate; and a conductive layer arranged on at least one side of the substrate, wherein the transparent conductive film has a surface resistance value of 200 Ω/□ or less, and wherein the transparent conductive film has a maximum value of a light transmittance in a wavelength region of from 780 nm to 2,500 nm of 85% or more.
[2] The transparent conductive film according to the above-mentioned item [1] may have a surface resistance value of 100 Ω/□ or less.
[3] The transparent conductive film according to the above-mentioned item [1] or [2] may have a ratio (T905/T555) of a light transmittance (T905) at a wavelength of 905 nm to a light transmittance (T555) at a wavelength of 555 nm of more than 0.95 and 1.1 or less.
[4] The transparent conductive film according to any one of the above-mentioned items [1] to [3] may have a maximum value of a light transmittance in a wavelength region of from 900 nm to 1,600 nm of 85% or more.
[5] The transparent conductive film according to any one of the above-mentioned items [1] to [4] may have a light transmittance at a wavelength of 905 nm of 85% or more.
[6] In the transparent conductive film according to any one of the above-mentioned items [1] to [5], the conductive layer may contain a fiber-based conductive material and a polymer matrix.
[7] The transparent conductive film according to the above-mentioned item [6] may be a metal nanowire.
[8] The transparent conductive film according to any one of the above-mentioned items [1] to [7] may be a transparent conductive film for a transparent heater.

### Advantageous Effects of Invention

According to the embodiment of the present invention, the transparent conductive film excellent in translucency in a near-infrared region can be provided.

### Brief Description of Drawings

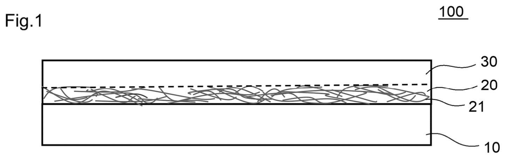

FIG. **1** is a schematic sectional view of a transparent conductive film according to one embodiment of the present invention.

### Description of Embodiments

Embodiments of the present invention are described below. However, the present invention is not limited to these embodiments.

### A. Overall Configuration of Transparent Conductive Film

FIG. **1** is a schematic sectional view of a transparent conductive film according to one embodiment of the present invention. A transparent conductive film **100** includes a substrate **10** and a conductive layer **20** arranged on at least one side of the substrate **10.** In one embodiment, the conductive layer **20** contains a fiber-based conductive material **21.** Examples of the fiber-based conductive material include metal nanowires and carbon nanotubes. Of those, metal nanowires are preferably used. The transparent conductive film may further include any appropriate other layer (not shown).

In one embodiment, the transparent conductive film **100** includes a protective layer **30** arranged on the conductive layer **20** on a side opposite to the substrate **10.** The protective layer **30** may be a layer that protects the fiber-based conductive material **21.** In the embodiment of the present invention, the durability of the conductive layer **20** can be improved by arranging the protective layer **30.** More specifically, while the conductive layer including the fiber-based conductive material (e.g., metal nanowires) is characterized by low scratch resistance, low humidity durability, and the like, those problems are solved and the durability of the conductive layer (consequently, the durability of the transparent conductive film) can be improved by arranging the protective layer. The conductive layer **20** may contain a component for forming the protective layer **30** (e.g., a resin for forming the protective layer).

The surface resistance value of the transparent conductive film is 200 Ω/□ or less, preferably from 0.01 Ω/□ to 200 Ω/□, more preferably from 1 Ω/□ to 180 Ω/□, particularly preferably from 5 Ω/□ to 150 Ω/□, most preferably from 10 Ω/□ to 100 Ω/□. The surface resistance value of the transparent conductive film may be 100 Ω/□ or less, may be 60 Ω/□ or less, may be 50 Ω/□ or less, may be 45 Ω/□ or less, or may be 40 Ω/□. When the surface resistance value falls within such ranges, a transparent conductive film particularly suitable for an application to a transparent heater (particularly, a transparent heater for a vehicle) can be obtained. In one embodiment, the surface resistance value of the transparent conductive film is set to 20 Ω/□ or more. While the thickness of the conductive layer (the amount of the fiber-based conductive material in the conductive layer) is given as one factor in controlling the surface resistance value of the transparent conductive film, a transparent conductive film excellent in light transmittance (e.g., translucency in a near-infrared region) can be obtained by adjusting the thickness of the conductive layer so that the surface resistance value becomes a predetermined value or more.

The transparent conductive film has a light transmittance in a wavelength region of from 780 nm to 2,500 nm of 85% or more, preferably 90% or more. When the light transmittance in the wavelength region of from 780 nm to 2,500 nm falls within such ranges, a transparent conductive film suitable for an application involving transmitting laser light in a near-infrared region can be provided. For example, in the field of automated driving of a vehicle using light detection and ranging (LiDAR), a transparent conductive film suitable for a member that can efficiently transmit laser light (near-infrared region) required for sensing can be provided. The transparent conductive film having a light transmittance in the wavelength region of from 780 nm to 2,500 nm falling within the above-mentioned ranges may be obtained by forming, for example, a conductive layer containing metal nanowires. The light transmittance in the wavelength region of from 780 nm to 2,500 nm is preferably as high as possible, and an upper limit thereof is, for example, 95% (preferably 98%). The term "light transmittance in a wavelength region within a predetermined range" as used herein means the maximum value of the light transmittance in the range. That is, the term "light transmittance in the wavelength region of from 780 nm to 2,500 nm" and the term "maximum value of the light transmittance in the wavelength region of from 780 nm to 2,500 nm" have the same meaning. The light transmittance may be measured with a predetermined spectrophotometer.

In one embodiment, the transparent conductive film is used for a transparent heater (e.g., a transparent heater for a vehicle). The transparent heater may have any appropriate configuration. Typically, the transparent heater may have a configuration in which a transparent conductive film having a pair of electrodes arranged thereon may be energized to generate heat. In the transparent heater, the transparent conductive film may be used as a heat source. The transparent conductive film including the conductive layer containing metal nanowires is advantageous also in that the transparent conductive film has excellent heating characteristics in addition to excellent near-infrared transmittance, and hence may be preferably used for an anti-fog heater (a transparent heater) in a window glass of a vehicle, for example.

The transparent conductive film has a light transmittance in a wavelength region of from 900 nm to 1,600 nm of preferably 80% or more, more preferably 85% or more, particularly preferably 90% or more. When the light transmittance in the wavelength region of from 900 nm to 1,600 nm falls within such ranges, the above-mentioned effects become remarkable. The light transmittance in the wavelength region of from 900 nm to 1,600 nm is preferably as high as possible, and an upper limit thereof is, for example, 95% (preferably 98%). The term "light transmittance in the wavelength region of from 900 nm to 1,600 nm" and the term "maximum value of the light transmittance in the wavelength region of from 900 nm to 1,600 nm" have the same meaning. In addition, in one embodiment, the transparent conductive film has a minimum value of the light transmittance in the wavelength region of from 900 nm to 1,600 nm of 80% or more. That is, in the entire wavelength region of from 900 nm to 1,600 nm, the light transmittance may be 80% or more. In the entire wavelength region of from 900 nm to 1,600 nm, the light transmittance is more preferably 85% or more, still more preferably 90% or more.

A ratio (T905/T555) of a light transmittance (T905) at a wavelength of 905 nm to a light transmittance (T555) at a wavelength of 555 nm is preferably more than 0.95 and 1.2 or less, more preferably from 0.95 to 1.2, more preferably from 0.98 to 1.15, still more preferably from 0.99 to 1.1, still more preferably from 1 to 1.1, particularly preferably from 1 to 1.05. In one embodiment, the ratio T905/T555 is more than 0.95 and 1.1 or less. When the ratio T905/T555 falls within such ranges, a transparent conductive film that can preferably transmit laser light required for sensing can be obtained.

The light transmittance at a wavelength of 905 nm is preferably 85% or more, more preferably 88% or more, still more preferably 90% or more. When the light transmittance at a wavelength of 905 nm falls within such ranges, a transparent conductive film suitable for an application involving transmitting laser light in a near-infrared region can be provided. The light transmittance at a wavelength of 905 nm is preferably as high as possible, and an upper limit thereof is, for example, 95% (preferably 98%).

The light transmittance at a wavelength of 555 nm is preferably 80% or more, more preferably from 85% to 95%.

The thickness of the transparent conductive film is preferably from 10 µm to 500 µm, more preferably from 15 µm to 300 µm, still more preferably from 20 µm to 200 µm.

### B. Conductive Layer

In one embodiment, the conductive layer contains a fiber-based conductive material and a polymer matrix. When the conductive layer containing the fiber-based conductive material is formed, a transparent conductive film excellent in bendability and also excellent in light transmittance can be obtained. The fiber-based conductive material is protected by the polymer matrix. As a result, the corrosion of the fiber-based conductive material is prevented, and hence a transparent conductive film that is more excellent in durability can be obtained.

The thickness of the conductive layer is preferably from 50 nm to 300 nm, more preferably from 80 nm to 200 nm.

### (Fiber-based Conductive Material)

Metal nanowires may be preferably used as the fiber-based conductive material.

The term "metal nanowire" refers to a conductive substance that uses a metal as a material, has a needle- or thread-like shape, and has a diameter of the order of nanometers. The metal nanowires may be linear or curved. When the conductive layer including the metal nanowires is used, the metal nanowires are formed into a network shape. Accordingly, even when the metal nanowires are used in a small amount, a good electrical conduction path can be formed, and hence a transparent conductive film having a small electrical resistance can be obtained. Further, the metal nanowires are formed into a network shape, and hence opening portions are formed in gaps of the network structure. As a result, a transparent conductive film having a high light transmittance can be obtained.

The ratio (aspect ratio: L/d) between a thickness "d" and a length L of the fiber-based conductive material (preferably metal nanowires) is preferably from 10 to 100,000, more preferably from 50 to 100,000, particularly preferably from 100 to 10,000. When such fiber-based conductive material having a large aspect ratio is used, fibers of the fiber-based conductive material satisfactorily intersect with one another, and hence high conductivity can be expressed with a small amount of the fiber-based conductive material. As a result, a transparent conductive film having a high light transmittance can be obtained. The term "thickness of the fiber-based conductive material" as used herein has the following meanings: when the section of the fiber-based conductive material has a circular shape, the term means the diameter of the circle; when the section has an elliptical shape, the term means the short diameter of the ellipse; and when the section has a polygonal shape, the term means the longest diagonal of the polygon. The thickness and length of the fiber-based conductive material may be observed with a scanning electron microscope or a transmission electron microscope.

The thickness of the fiber-based conductive material (preferably metal nanowires) is preferably less than 500 nm, more preferably less than 200 nm, particularly preferably from 10 nm to 100 nm, most preferably from 10 nm to 50 nm. When the thickness falls within such ranges, a conductive layer having a high light transmittance can be formed.

The length of the fiber-based conductive material (preferably metal nanowires) is preferably from 1 µm to 1,000 µm, more preferably from 10 µm to 500 µm, particularly preferably from 10 µm to 100 µm. When the length falls within such ranges, a transparent conductive film having high conductivity can be obtained.

Any appropriate metal may be used as a metal for forming the metal nanowires as long as the metal is a conductive metal. Examples of the metal for forming the metal nanowires include silver, gold, copper, and nickel. In addition, a material obtained by subjecting any such metal to plating treatment (e.g., gold plating treatment) may be used. Of those, silver, copper, or gold is preferred, and silver is more preferred from the viewpoint of conductivity.

Any appropriate method may be adopted as a method of producing the metal nanowires. Examples thereof include: a method involving reducing silver nitrate in a solution; and a method involving causing an applied voltage or current to act on a precursor surface from a tip portion of a probe, drawing metal nanowires at the tip portion of the probe, and continuously forming the metal nanowires. In the method involving reducing silver nitrate in the solution, silver nanowires may be synthesized by performing the liquid-phase reduction of a silver salt such as silver nitrate in the presence of a polyol such as ethylene glycol, and polyvinyl pyrrolidone. The mass production of silver nanowires each having a uniform size may be performed in conformity with a method described in, for example, Xia, Y. et al., Chem. Mater. (2002), 14, 4736-4745 or Xia, Y. et al., Nano Letters (2003), 3(7), 955-960.

The content of the fiber-based conductive material (preferably metal nanowires) in the conductive layer is preferably from 30 wt% to 90 wt%, more preferably from 45 wt% to 80 wt% with respect to the total weight of the conductive layer. When the content falls within such ranges, a transparent conductive film excellent in conductivity and light transmittance can be obtained.

When the metal nanowires are silver nanowires, the density of the conductive layer is preferably from 1.3 g/cm³ to 10.5 g/cm³, more preferably from 1.5 g/cm³ to 3.0 g/cm³. When the density falls within such ranges, a transparent conductive film excellent in conductivity and light transmittance can be obtained.

In one embodiment, the conductive layer is patterned. Any appropriate method may be adopted as a method for the patterning in accordance with the form of the conductive layer. The pattern shape of the conductive layer may be any appropriate shape in accordance with applications. Examples thereof include patterns described in JP 2011-511357 A, JP 2010-164938 A, JP 2008-310550 A, JP 2003-511799 A, and JP 2010-541109 A. The conductive layer may be patterned by using any appropriate method in accordance with the form of the conductive layer after its formation on a substrate.

In one embodiment, the metal nanowires in the conductive layer have a fused network structure. The metal nanowires having a fused network structure are in a state in which the metal nanowires are fused with each other at contact points. When the conductive layer containing the metal nanowires having a fused network structure is formed, a transparent conductive film having higher conductivity can be obtained without inhibition of transparency.

The conductive layer containing the metal nanowires having a fused network structure may be formed by, for example, adding an additive for promoting fusion to a metal nanowire dispersion liquid to be used at the time of the formation of the conductive layer. Examples of the additive include metal halides (e.g., LiCl, CsCl, NaF, NaCl, NaBr, NaI, KCl, MgCl₂, CaCl₂, AlCl₃, and AgF), inorganic acids (e.g., nitric acid, nitrous acid, and sulfuric acid), organic acids (e.g., oxalic acid, citric acid, formic acid, acetic acid, lactic acid, propionic acid, butyric acid, acrylic acid, pyruvic acid, trichloroacetic acid, trifluoroacetic acid, hexanoic acid, octanoic acid, decanoic acid, dodecanoic (lauric) acid, tetradecanoic (myristic) acid, hexadecanoic (palmitic) acid, octadecanoic (stearic) acid, 2-ethylbutyric acid, 2-methylhexanoic acid, 2-ethylhexanoic acid, 2-propylpentanoic acid, pivalic acid, neoheptanoic acid, neononanoic acid, and neodecanoic acid), silver salts (e.g., silver nitrate, silver nitrite, silver lactate, silver chloride, silver sulfate, silver oxide, silver acetate, silver chlorate, silver sulfide, silver formate, silver hexanoate, silver octanoate, silver decanoate, silver dodecanoate, silver tetradecanoate, silver hexadecanoate, silver octadecanoate, silver pentanoate, silver pivalate, silver neoheptanoate, silver neononanoate, and silver neodecanoate), and compounds (e.g., hydrogen chloride and sodium chloride) each containing an element (e.g., chlorine or sulfur) that may form a silver salt. Of those, a metal halide is preferred, and NaCl, AgF, LiF, NaBr, or NaF is more preferred. In one embodiment, the conductive layer containing the metal nanowires having a fused network structure may be formed by applying the metal nanowire dispersion liquid containing the additive, and then performing heat treatment and/or pressure treatment. The temperature of the heat treatment is, for example, from 50°C to 200°C.

The conductive layer containing the metal nanowires having a fused network structure may be formed by exposing an applied layer of the metal nanowire dispersion liquid to an acid halide vapor. Examples of the acid halide vapor include vapors of HCl, HBr, HI, and a mixture thereof.

The metal nanowires having a fused network structure and a production method therefor are described in, for example, JP 2015-530693 A, the description of which is incorporated herein by reference.

### (Polymer Matrix)

Any appropriate polymer may be used as a polymer for forming the polymer matrix. Examples of the polymer include: acrylic polymers; polyester-based polymers such as polyethylene terephthalate; aromatic polymers, such as polystyrene, polyvinyltoluene, polyvinylxylene, polyimide, polyamide, and polyamide imide; polyurethane-based polymers; epoxy-based polymers; polyolefin-based polymers; acrylonitrile-butadiene-styrene copolymers (ABS); cellulose; silicon-based polymers; polyvinyl chloride; polyacetate; polynorbornene; synthetic rubbers; and fluorine-based polymers. A curable resin (preferably a UV-curable resin) including a polyfunctional acrylate, such as pentaerythritol triacrylate (PETA), neopentyl glycol diacrylate (NPGDA), dipentaerythritol hexaacrylate (DPHA), dipentaerythritol pentaacrylate (DPPA), or trimethylolpropane triacrylate (TMPTA), is preferably used. The polymer matrix may be a resin for forming the protective layer (described in detail later) .

The polymer matrix may be formed by: forming a layer formed of the fiber-based conductive material on a substrate; then applying a polymer solution onto the layer; and then drying or curing the applied layer. By this operation, a conductive layer in which the fiber-based conductive material is present in the polymer matrix is formed. The polymer solution contains the polymer for forming the polymer matrix or a precursor of the polymer (a monomer for forming the polymer). The polymer solution may contain a solvent. The solvent in the polymer solution is, for example, an alcohol-based solvent, a ketone-based solvent, tetrahydrofuran, a hydrocarbon-based solvent, or an aromatic solvent. The solvent is preferably volatile. The boiling point of the solvent is preferably 200°C or less, more preferably 150°C or less, still more preferably 100°C or less.

### C. Protective Layer

The thickness of the protective layer is preferably from 10 nm to 1,000 nm, more preferably from 60 nm to 800 nm. When the thickness falls within such ranges, a transparent conductive film excellent in durability can be obtained.

The total thickness of the conductive layer and the protective layer is preferably from 60 nm to 1,000 nm, more preferably from 70 nm to 800 nm. When the total thickness falls within such ranges, a transparent conductive film excellent in durability can be obtained.

Typically, the protective layer includes a resin. Any appropriate resin may be used as the resin for forming the protective layer as long as the effects of the present invention can be obtained. Examples of the resin include: acrylic resins; polyester-based resins such as polyethylene terephthalate; aromatic resins, such as polystyrene, polyvinyltoluene, polyvinylxylene, polyimide, polyamide, and polyamide imide; polyurethane-based resins; epoxy-based resins; polyolefin-based resins; an acrylonitrile-butadiene-styrene copolymer (ABS); cellulose; silicon-based resins; polyvinyl chloride; polyacetate; polynorbornene; synthetic rubbers; and fluorine-based resins.

In one embodiment, a curable resin (e.g., an active energy ray-curable resin or a thermosetting resin) is used as the resin for forming the protective layer. The protective layer including the curable resin may be formed by curing a curable composition for forming a protective layer.

In one embodiment, a cured product of a curable composition for forming a protective layer containing a (meth)acrylate monomer and/or a (meth)acrylate oligomer is used as the curable resin. When such resin is used, a protective layer in which the shear strength is preferably adjusted can be obtained. Specific examples of the (meth)acrylate monomer and acrylate oligomer include trimethylolpropane tri(meth)acrylate, ethylene oxide-modified trimethylolpropane tri(meth)acrylate, propylene oxide-modified trimethylolpropane tri(meth)acrylate, trimethylolpropane tetra(meth)acrylate, tris(acryloxyethyl) isocyanurate, caprolactone-modified tris(acryloxyethyl) isocyanurate, pentaerythritol tri(meth)acrylate, pentaerythritol tetra(meth)acrylate, dipentaerythritol penta (meth) acrylate, dipentaerythritol hexa(meth)acrylate, an alkyl-modified dipentaerythritol tri(meth)acrylate, an alkyl-modified dipentaerythritol tetra(meth)acrylate, an alkyl-modified dipentaerythritol penta(meth)acrylate, and caprolactone-modified dipentaerythritol hexa(meth)acrylate. Of those, pentaerythritol tri(meth)acrylate, dipentaerythritol hexa(meth)acrylate, or dipentaerythritol penta(meth)acrylate is preferred. The monomers and oligomers may be used alone or in combination thereof.

In one embodiment, a cured product of a curable composition for forming a protective layer containing a urethane (meth)acrylate oligomer is used as the curable resin. When such resin is used, a protective layer in which the shear strength is preferably adjusted can be obtained. Examples of the urethane (meth)acrylate oligomer include: an oligomer obtained by causing a polyol and a polyisocyanate to react with each other, and then causing a (meth)acrylate having a hydroxy group to react therewith; an oligomer obtained by causing a polyisocyanate and a (meth)acrylate having a hydroxy group to react with each other, and then causing a polyol to react therewith; and an oligomer obtained by causing a polyisocyanate, a polyol, and a (meth)acrylate having a hydroxy group to react with each other.

Examples of the polyol include polyethylene glycol, polypropylene glycol, polytetramethylene ether glycol, and copolymerized products thereof, ethylene glycol, propylene glycol, 1,4-butanediol, and 2,2'-thiodiethanol.

Examples of the polyisocyanate include isophorone diisocyanate, 2,4-tolylene diisocyanate, 2,6-tolylene diisocyanate, m-phenylene diisocyanate, p-phenylene diisocyanate, hexamethylene diisocyanate, trimethylhexamethylene diisocyanate, 4,4'-diphenylmethane diisocyanate, hydrogenated diphenylmethane diisocyanate, 1,3-xylylene diisocyanate, and 1,4-xylylene diisocyanate.

The curable composition for forming a protective layer preferably contains any appropriate photopolymerization initiator. Examples of the photopolymerization initiator include: benzoin ethers, such as benzoin n-butyl ether and benzoin isobutyl ether; benzyl ketals, such as benzyl dimethyl ketal and benzyl diethyl ketal; acetophenones, such as 2,2-dimethoxyacetophenone and 2,2-diethoxyacetophenone; α-hydroxyalkylphenones, such as 1-hydroxycyclohexyl phenyl ketone, [2-hydroxy-2-methyl-1-(4-ethylenephenyl)propan-1-one], 2-hydroxy-2-methyl-1-phenylpropan-1-one, 1-[4-(2-hydroxyethoxy)phenyl]-2-hydroxy-2-methyl-1-propan-1-one, and 2-hydroxy-2-methyl-1-(4-isopropylphenyl)propan-1-one; α-aminoalkylphenones, such as 2-methyl-1-[4-(methylthio)phenyl]-1-morpholinopropane and 2-benzyl-2-dimethylamino-1-(4-morpholinophenyl)-1-butanone; monoacylphosphine oxides, such as 2,4,6-trimethylbenzoyl diphenylphosphine oxide and 2,4,6-trimethylbenzoyl phenylethoxyphosphine oxide; and monoacylphosphine oxides, such as bis(2,6-dimethoxybenzoyl)-2,4,4-trimethylpentylphosphine oxide and bis(2,4,6-trimethylbenzoyl) phenylphosphine oxide.

### D. Substrate

The substrate typically includes any appropriate resin. Examples of the resin for forming the substrate include a cycloolefin-based resin, a polyimide-based resin, a polyvinylidene chloride-based resin, a polyvinyl chloride-based resin, a polyethylene terephthalate-based resin, and a polyethylene naphthalate-based resin. Of those, a cycloolefin-based resin is preferably used.

The glass transition temperature of the resin for forming the substrate is preferably from 50°C to 200°C, more preferably from 60°C to 180°C, still more preferably from 70°C to 160°C.

The thickness of the substrate is preferably from 8 µm to 500 µm, more preferably from 10 µm to 250 µm, still more preferably from 10 µm to 150 µm, particularly preferably from 15 µm to 100 µm.

The total light transmittance of the substrate is preferably 80% or more, more preferably 85% or more, particularly preferably 90% or more. When the total light transmittance falls within such ranges, there can be obtained a transparent conductive film suitable as a transparent conductive film to be included in a transparent heater or the like.

The tensile breaking strength of the substrate at 23°C is preferably from 30 MPa to 100 MPa, more preferably from 50 MPa to 95 MPa, still more preferably from 70 MPa to 90 MPa. According to the present invention, even when a film having poor bendability is used, sufficient bendability can be exhibited as a transparent conductive film. The tensile breaking strength is measured under normal temperature (23°C) in conformity with JIS K 7161.

The substrate may further contain any appropriate additive as required. Specific examples of the additive include a plasticizer, a heat stabilizer, a light stabilizer, a lubricant, an antioxidant, a UV absorber, a flame retardant, a colorant, an antistatic agent, a compatibilizer, a crosslinking agent, and a thickener. The kind and amount of the additive to be used may be appropriately set in accordance with purposes.

The substrate may be subjected to various kinds of surface treatment as required. Any appropriate method is adopted for the surface treatment in accordance with purposes. Examples thereof include low-pressure plasma treatment, UV irradiation treatment, corona treatment, flame treatment, and acid or alkali treatment. In one embodiment, the surface of a transparent substrate is hydrophilized by subjecting the transparent substrate to the surface treatment. When the substrate is hydrophilized, processability at the time of the application of a composition for forming a conductive layer prepared by using an aqueous solvent becomes excellent. In addition, a transparent conductive film excellent in adhesiveness between its substrate and conductive layer can be obtained. In addition, the substrate may include a plurality of layers, and may include, for example, a resin film and any other layer formed on the resin film.

### E. Method of producing Transparent Conductive Film

The transparent conductive film may be produced by any appropriate method. In one embodiment, the transparent conductive film may be formed by: applying, to a substrate, a composition for forming a conductive layer containing metal nanowires; and then applying a composition for forming a protective layer (polymer liquid) thereto. In addition, the transparent conductive film may be obtained by: incorporating metal nanowires into a composition for forming a protective layer; and applying, to a substrate, the composition for forming a protective layer containing the metal nanowires.

The composition for forming a conductive layer may contain any appropriate solvent in addition to the metal nanowires. The composition for forming a conductive layer may be prepared as a dispersion liquid of the metal nanowires. Examples of the solvent include water, an alcohol-based solvent, a ketone-based solvent, an ether-based solvent, a hydrocarbon-based solvent, and an aromatic solvent. Of those, water is preferably used from the viewpoint of reducing an environmental load. The composition for forming a conductive layer may further contain any appropriate additive in accordance with purposes. Examples of the additive include an anticorrosive material for preventing the corrosion of the metal nanowires and a surfactant for preventing the aggregation of the metal nanowires. The kinds, number, and amounts of the additives to be used may be appropriately set in accordance with purposes.

The dispersion concentration of the metal nanowires in the composition for forming a conductive layer is preferably from 0.1 wt% to 1 wt%. When the dispersion concentration falls within such range, a conductive layer excellent in conductivity and light transmittance can be formed.

Any appropriate method may be adopted as a method of applying the composition for forming a conductive layer. Examples of the application method include spray coating, bar coating, roll coating, die coating, inkjet coating, screen coating, dip coating, a relief printing method, an intaglio printing method, and a gravure printing method. Any appropriate drying method (such as natural drying, blast drying, or heat drying) may be adopted as a method of drying the applied layer. In the case of the heat drying, for example, a drying temperature is typically from 50°C to 200°C, preferably from 80°C to 150°C. A drying time is typically from 1 minute to 10 minutes.

The composition for forming a protective layer contains a resin for forming the protective layer or a precursor (a monomer or an oligomer) thereof. The composition for forming a protective layer may further contain any appropriate additive as required. The composition may contain, for example, a photopolymerization initiator or a coupling agent. In addition, the composition for forming a protective layer may further contain any appropriate solvent for dilution. Examples of the solvent include toluene, butyl acetate, isobutanol, ethyl acetate, cyclohexane, cyclohexanone, methylcyclohexanone, hexane, acetone, methyl ethyl ketone, methyl isobutyl ketone, propylene glycol monomethyl ether, diethyl ether, and ethylene glycol.

Any appropriate method may be adopted as a method of applying the composition for forming a protective layer. Examples of the application method include spray coating, bar coating, roll coating, die coating, inkjet coating, screen coating, dip coating, a relief printing method, an intaglio printing method, and a gravure printing method.

When the curable composition for forming a protective layer is used, curing treatment is performed after the curable composition for forming a protective layer is applied. Any appropriate method is adopted as a method for the curing treatment in accordance with the composition of the curable composition for forming a protective layer. The method for the curing treatment is, for example, a method involving heat-drying the solvent, and then irradiating the applied composition with UV light having a workload of from 50 mJ/cm² to 400 mJ/cm² at an irradiation intensity of from 500 mW/cm² to 3,000 mW/cm² through use of a UV irradiator.

### Examples

The present invention is specifically described below by way of Examples. However, the present invention is by no means limited by these Examples. Measurement methods for characteristics are as described below. Unless otherwise specified, "part(s)" and "%" in Examples and Comparative Examples are by weight.

### (1) Surface Resistance

The surface resistance value of a transparent conductive film was measured with a product available under the product name "EC-80" from NAPSON Corporation. A measurement temperature was set to 23°C.

### (2) Transmittance

A transmittance in a wavelength region of from 780 nm to 2,500 nm was measured at room temperature through use of a transmittance measurement mode of "HITACHI SPECTROPHOTOMETER U-4100" manufactured by Hitachi High-Tech Science Corporation. Transmittances at a wavelength of 555 nm and a wavelength of 905 nm and a ratio (T905 nm/T555 nm) therebetween, and a maximum transmittance and a minimum transmittance in a range of from 900 nm to 1,600 nm are shown in Table 1.

### [Production Example 1] (Synthesis of Silver Nanowires and Preparation of Silver Nanowire Dispersion Liquid)

5 ml of anhydrous ethylene glycol and 0.5 ml of a solution of PtCl₂ in anhydrous ethylene glycol (concentration: 1.5×10⁻⁴ mol/L) were loaded into a reaction vessel with a stirrer at 160°C. After a lapse of 4 minutes, 2.5 ml of a solution of AgNO₃ in anhydrous ethylene glycol (concentration: 0.12 mol/l) and 5 ml of a solution of polyvinyl pyrrolidone (MW: 55,000) in anhydrous ethylene glycol (concentration: 0.36 mol/l) were simultaneously dropped to the resultant solution over 6 minutes. After the dropping, the mixture was heated to 160°C and a reaction was performed over 1 hour or more until AgNO₃ was completely reduced. Thus, silver nanowires were produced. Next, acetone was added to the reaction mixture containing the silver nanowires obtained as described above until the volume of the reaction mixture became 5 times as large as that before the addition. After that, the reaction mixture was centrifuged (2,000 rpm, 20 minutes). Thus, silver nanowires were obtained.

The resultant silver nanowires each had a short diameter of from 30 nm to 40 nm, a long diameter of from 30 nm to 50 nm, and a length of from 5 µm to 50 µm.

The silver nanowires (concentration: 0.2 wt%) and pentaethylene glycol dodecyl ether (concentration: 0.1 wt%) were dispersed in pure water to prepare a silver nanowire dispersion liquid I.

### [Example 1]

The silver nanowire dispersion liquid I obtained in Production Example 1 was applied onto a substrate (polyethylene terephthalate film, manufactured by Mitsubishi Chemical Corporation, product name: "T910E125", thickness: 125 µm) with a die coater so that a resistance value after film formation became 100 Ω/□, followed by heating at 120°C for 2 minutes to form a film.

Further, a monomer composition having a solid content concentration of 1 wt% was obtained by diluting 1 part by weight of pentaerythritol triacrylate (manufactured by Osaka Organic Chemical Industry Ltd., product name: "Viscoat #300") and 0.1 part by weight of a photopolymerization initiator (manufactured by BASF SE, product name: "IRGACURE 907") with 59 parts by weight of isopropyl alcohol and 25 parts by weight of diacetone alcohol. The monomer composition was applied to the silver nanowire ink-applied surface with a spin coater so that a dry film thickness became 70 nm. The resultant was heated at 80°C for 1 minute, followed by irradiation with UV light having an integrated exposure of 200 mJ/cm² with a high-pressure mercury lamp. Thus, a transparent conductive film including a substrate, a conductive layer, and a protective layer was obtained.

### [Example 2]

A transparent conductive film was obtained in the same manner as in Example 1 except that the silver nanowire dispersion liquid I obtained in Production Example 1 was applied onto a substrate (cycloolefin (norbornene)-based resin film (manufactured by Zeon Corporation, product name: "ZEONOR ZF16", thickness: 40 µm) with a die coater so that a resistance value after film formation became 37 Ω/□.

### [Example 3]

A transparent conductive film was obtained in the same manner as in Example 2 except that the silver nanowire dispersion liquid I obtained in Production Example 1 was applied with a die coater so that a resistance value after film formation became 25 Ω/□.

### [Example 4]

A transparent conductive film was obtained in the same manner as in Example 2 except that the silver nanowire dispersion liquid I obtained in Production Example 1 was applied with a die coater so that a resistance value after film formation became 20 Ω/□.

### [Example 5]

A transparent conductive film was obtained in the same manner as in Example 2 except that the silver nanowire dispersion liquid I obtained in Production Example 1 was applied with a die coater so that a resistance value after film formation became 18 Ω/□.

### [Example 6]

A transparent conductive film was obtained in the same manner as in Example 2 except that the silver nanowire dispersion liquid I obtained in Production Example 1 was applied with a die coater so that a resistance value after film formation became 13 Ω/□.

### [Comparative Example 1]

A sintered target containing indium oxide and tin oxide at a weight ratio of 90:10 or 96.7:3.3 was mounted on a parallel plate-type winding magnetron sputtering device. After that, a film was formed by reactive sputtering on one side of a substrate (polyethylene terephthalate film, manufactured by Mitsubishi Chemical Corporation, product name: "T910E125", thickness: 125 µm) in an atmosphere at 5.3×10⁻¹ Pa formed of 80% of argon gas and 20% of oxygen gas. A transparent conductive film was formed so that a resistance value after film formation became 40 Ω/□.

The light transmittance of the transparent conductive film obtained as described above in the wavelength region of from 780 nm to 2,500 nm was less than 85%.

**Table 1**

| | | Example 1 | Example 2 | Example 3 | Example 4 | Example 5 | Example 6 | Comparative Example 1 |
|---|---|---|---|---|---|---|---|---|
| Surface resistance value | [Ω/□] | 100 | 37 | 25 | 20 | 18 | 13 | 40 |
| Transmittance (T555 nm) | [%] | 90.1 | 87.4 | 88.3 | 88.4 | 86.3 | 85.9 | 86.4 |
| Transmittance (T905 nm) | [%] | 89.3 | 91.4 | 91.6 | 91.2 | 89.9 | 86.4 | 81.8 |
| T905 nm/T555 nm | - | 0.99 | 1.05 | 1.04 | 1.03 | 1.04 | 1.01 | 0.95 |
| Max (900 nm to 1,600 nm) | [%] | 89.3 | 93.2 | 91.7 | 95. 8 | 91.7 | 89.3 | 84.5 |
| Min (900 nm to 1,600 nm) | [%] | 86.3 | 85.0 | 86.6 | 88.5 | 83.0 | 76.0 | 79.6 |

As is apparent from Table 1, according to the present invention, the transparent conductive film excellent in translucency in a near-infrared region can be provided. For example, in the field of automated driving of a vehicle using light detection and ranging (LiDAR), the transparent conductive film of each of Examples is suitable for a member that can efficiently transmit laser light (near-infrared region) required for sensing.

### Reference Signs List

**10** substrate
**20** conductive layer
**30** protective layer
**100** transparent conductive film

## Claims

1. A transparent conductive film, comprising:
a substrate; and
a conductive layer arranged on at least one side of the substrate,
wherein the transparent conductive film has a surface resistance value of 200 Ω/□ or less, and
wherein the transparent conductive film has a maximum value of a light transmittance in a wavelength region of from 780 nm to 2,500 nm of 85% or more.

2. The transparent conductive film according to claim 1, wherein the transparent conductive film has a surface resistance value of 100 Ω/□ or less.

3. The transparent conductive film according to claim 1, wherein the transparent conductive film has a ratio (T905/T555) of a light transmittance (T905) at a wavelength of 905 nm to a light transmittance (T555) at a wavelength of 555 nm of more than 0.95 and 1.1 or less.

4. The transparent conductive film according to claim 1, wherein the transparent conductive film has a maximum value of a light transmittance in a wavelength region of from 900 nm to 1,600 nm of 85% or more.

5. The transparent conductive film according to claim 1, wherein the transparent conductive film has a light transmittance at a wavelength of 905 nm of 85% or more.

6. The transparent conductive film according to claim 1, wherein the conductive layer contains a fiber-based conductive material and a polymer matrix.

7. The transparent conductive film according to claim 6, wherein the fiber-based conductive material is a metal nanowire.

8. The transparent conductive film according to claim 1, wherein the transparent conductive film is a transparent conductive film for a transparent heater.
